# EUROPEAN PATENT APPLICATION

(11) **EP 3 674 749 A1**
(43) Date of publication of application: **01.07.2020**
(21) Application number: 18860853.3
(22) Date of filing: 21.09.2018
(51) Int. Cl.: G01S 17/42, G01C 3/06, G01S 17/10, G02B 26/10

(54) **DISTANCE MEASUREMENT DEVICE AND OPTICAL SCANNING DEVICE**

(30) Priority: 28.09.2017 JP 2017188249
(71) Applicant: Pioneer Corporation, Tokyo 113-0021 (JP)
(72) Inventor: OCHIAI, Takanori, Kawagoe-shi Saitama 350-8555 (JP); OKUYAMA, Takehisa, Kawagoe-shi Saitama 350-8555 (JP); YANAGISAWA, Takuma, Kawagoe-shi Saitama 350-8555 (JP); OKUDA, Yoshiyuki, Kawagoe-shi Saitama 350-8555 (JP)
(74) Representative: Manitz Finsterwald Patent- und Rechtsanwaltspartnerschaft mbB
(86) International application number: PCT/JP2018/034989
(87) International publication number: WO 2019/065484

(57) **Abstract**

A ranging device comprising a light source unit that emits a pulsed light; an optical scanning unit that scans a predetermined region with the pulsed light and has an intersection point where a path of the pulsed light intersects when viewing a virtual surface inside the predetermined region; a ranging unit that receives a reflected light from an object irradiated with the pulsed light to measure a distance to the object; and a control unit that controls an emission of the pulsed light to the intersection point based on a predetermined condition on the reflected light.

## Description

### TECHNICAL FIELD

The present invention relates to an optical scanning device performing optical scanning and a ranging device performing optical ranging.

### BACKGROUND ART

For example, a ranging device is configured to measure a distance to an object by irradiating the object inside a target region with light to detect the light reflected by the object. For example, there is known a ranging device that performs two-dimensional or three-dimensional ranging by performing an optical scanning of the target region using an optical scanner.

An optical scanning type ranging device includes, for example, a Micro Electro Mechanical Systems (MEMS) mirror as the optical scanning device. For example, the MEMS mirror is provided with a light reflecting surface, which two-dimensionally swings (oscillates). Irradiating the light reflecting surface with light enables the scanning of the target region with the light reflected by the light reflecting surface. For example, Patent document 1 discloses an optical ranging device having an optical scanning unit that can perform Lissajous scanning of light incident on a light reflecting surface inside a target region by swinging a movable portion with the light reflecting surface.

### CITATION LIST

### PATENT LITERATURE

Patent Document 1: Japanese Patent Application Laid-Open No. 2011-053137

### DISCLOSURE OF THE INVENTION

### PROBLEMS TO BE SOLVED BY THE INVENTION

An optical scanning type ranging device sets each of a plurality of points inside a scanning trajectory as a ranging point to perform a ranging operation for each of the ranging points. Here, for example, in the case of performing scanning by the trajectory along a Lissajous curve, an optical scanning is performed such that the scanning trajectory intersects. In this case, it is assumed that, within one scanning cycle (a ranging cycle), multiple times of the ranging operations are performed to an identical ranging point. For example, when an accurate ranging result is acquired at the first ranging on the identical ranging point, a second ranging operation sometimes become unnecessary.

Therefore, in the case of such a scanning method where the scanning trajectory intersects, it is preferable that the ranging operation performed to the intersection point is performed under a different condition from the ranging operation performed on other ranging points that do not intersect. For example, corresponding to, for example, a ranging processing rate and ranging accuracy required to the device, it is preferable that execution and non-execution of each of the multiple times of the ranging operations, which are allowed to perform within one ranging cycle, at the intersection point are switchable.

Not limited to a ranging purpose, in the optical scanning device having a scanning mode that scans an overlapped point multiple times within a predetermined scanning cycle, it is preferable that the scanning at a point where the scanning position overlaps is performed under different conditions from the scanning at the other scanning position.

The present invention has been made in consideration of the above-described point. It is one of the problems for the present invention to provide a ranging device that ensures adjusting conditions of a ranging operation at a ranging point where the scanning trajectory intersects. Additionally, it is one of the problems for the present invention to provide an optical scanning device that ensures adjusting the conditions of the scanning operation at the point where the scanning trajectory intersects.

### SOLUTIONS TO THE PROBLEMS

An invention described in Claim 1 includes a light source unit that emits a pulsed light; an optical scanning unit that scans a predetermined region with the pulsed light and has an intersection point where a path of the pulsed light intersects when viewing a virtual surface inside the predetermined region; a ranging unit that receives a reflected light from an object irradiated with the pulsed light to measure a distance to the object; and a control unit that controls an emission of the pulsed light to the intersection point based on a predetermined condition on the reflected light.

An invention described in Claim 7 includes a light source unit that emits a light; an optical scanning unit that scans a predetermined region by the light while changing an irradiation direction of the light; a light receiving unit that receives a reflected light from an object where the light is irradiated; and a control unit that controls an emission of the light. The optical scanning unit is configured to emit the light multiple times in an identical direction during one scanning cycle, and the control unit controls a count of irradiation of the light in the identical direction during the one scanning cycle based on a predetermined condition on the reflected light.

### BRIEF DESCRIPTION OF THE DRAWINGS

FIG. 1 is a block diagram of a ranging device according to Embodiment 1.
FIG. 2A is a top view of a scanner in the ranging device according to Embodiment 1.
FIG. 2B is a cross-sectional view of the scanner in the ranging device according to Embodiment 1.
FIG. 3A is a schematic operation explanation drawing of the ranging device according to Embodiment 1.
FIG. 3B is the schematic operation explanation drawing of the ranging device according to Embodiment 1.
FIG. 4 is a drawing illustrating waveform of a driving signal applied to the scanner of the ranging device according to Embodiment 1 and a scanning path of a pulsed light by the scanner.
FIG. 5A is a drawing illustrating a ranging point of the ranging device according to Embodiment 1.
FIG. 5B is a drawing illustrating an emission configuration of the pulsed light at the ranging point in the ranging device according to Embodiment 1.
FIG. 6A is a block diagram of a control unit in the ranging device according to Embodiment 2.
FIG. 6B is a drawing illustrating an emission configuration of the pulsed light at the ranging point in the ranging device according to Embodiment 2.

### DESCRIPTION OF PREFERRED EMBODIMENTS

The following describes Embodiments of the present invention in detail.

### Embodiment 1

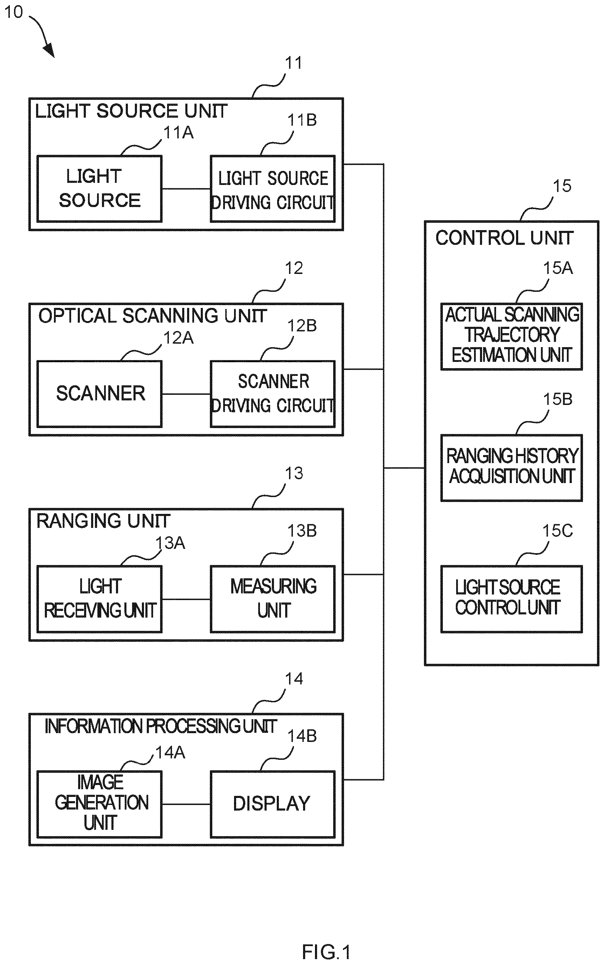

FIG. 1 is a block diagram of a ranging device 10 according to Embodiment 1. The ranging device 10 is an optical ranging device that optically measures a distance to an object. Using FIG. 1, an overall configuration of the ranging device 10 will be described.

First, in this Embodiment, the ranging device 10 includes a light source unit 11 that includes a light source 11A and a light source driving circuit 11B for driving the light source 11A. The light source 11A generates and emits a pulsed laser light (hereinafter referred to as a pulsed light). The light source driving circuit 11B generates a driving signal for the light source 11A to emit the pulsed light to apply to the light source 11A.

The ranging device 10 has an optical scanning unit 12 that scans a region (hereinafter referred to as a scanning target region) including a region as a ranging target (hereinafter referred to as an effective scanning region), using the pulsed light emitted from the light source 11A of the light source unit 11. In the Embodiment, the optical scanning unit 12 includes a scanner (an optical scanning means) 12A that execute the optical scanning of the scanning target region using the pulsed light and a scanner driving circuit 12B driving the scanner 12A. The scanner driving circuit 12B generates a driving signal driving the scanner 12A to apply to the scanner 12A.

The ranging device 10 has a ranging unit 13 that receives the light obtained by an operation of the scanner 12A of the optical scanning unit 12 to measure a distance to an object existing inside the effective scanning region. In the Embodiment, the ranging unit 13 has a light receiving unit 13A that receives and detects the light where the pulsed light is reflected by the object (hereinafter referred to as reflected light) and a measuring unit 13B that measures the distance between the ranging device 10 and the object based on the reflected light received by the light receiving unit 13A.

In the Embodiment, the ranging unit 13 generates ranging data that indicates a ranging result (distance information) to the object to which each of light pulses of the pulsed light is irradiated. For example, in the Embodiment, the ranging unit 13 generates a piece of the ranging data including a plurality of pieces of the distance information for each scanning cycle by the optical scanning unit 12. In the case when the scanning to the scanning target region is repeated, the scanning cycle means a period until a time point where a scanning state at an optional time point subsequently returns to the scanning state again.

The ranging device 10 has an information processing unit 14 that performs various kinds of processes to the information indicating the ranging result by the ranging unit 13. In the Embodiment, the information processing unit 14 has an image generation unit 14A that generates image data imaging the ranging data generated by the ranging unit 13 as a two-dimensional or a three-dimensional map, and a display 14B displaying the image data.

In the Embodiment, the image generation unit 14A converts each of the plurality of pieces of the ranging data, which is generated by the ranging unit 13 at each scanning cycle of the optical scanning unit 12, to the image data. The display 14B displays the plurality of pieces of the image data as a moving image along a time series.

The ranging device 10 has a control unit 15 that performs an operational control of the light source unit 11, the optical scanning unit 12, the ranging unit 13, and the information processing unit 14. In the Embodiment, the control unit 15 has an actual scanning trajectory estimation unit 15A that acquires information (scanning state information) indicating the scanning state of the optical scanning unit 12 from the optical scanning unit 12 to estimate an actual scanning trajectory of the optical scanning unit 12, and a ranging history acquisition unit 15B that acquires a history of the ranging by the ranging unit 13 from the ranging unit 13. The control unit 15 has a light source control unit 15C that performs the operational control of the light source unit 11 based on the actual scanning trajectory of the optical scanning unit 12 and the ranging history of the ranging unit 13.

The light source unit 11, the optical scanning unit 12, the light receiving unit 13A, and the light source control unit 15C constitute an optical scanning device in the ranging device 10. When considering that the optical scanning device is used for various applications, for example, the light that the light source unit 11 emits does not need to be the pulsed light, that is, the pulsed laser light; it is only necessary to be the light (electromagnetic wave) allowing the light receiving unit 13A to receive (detect).

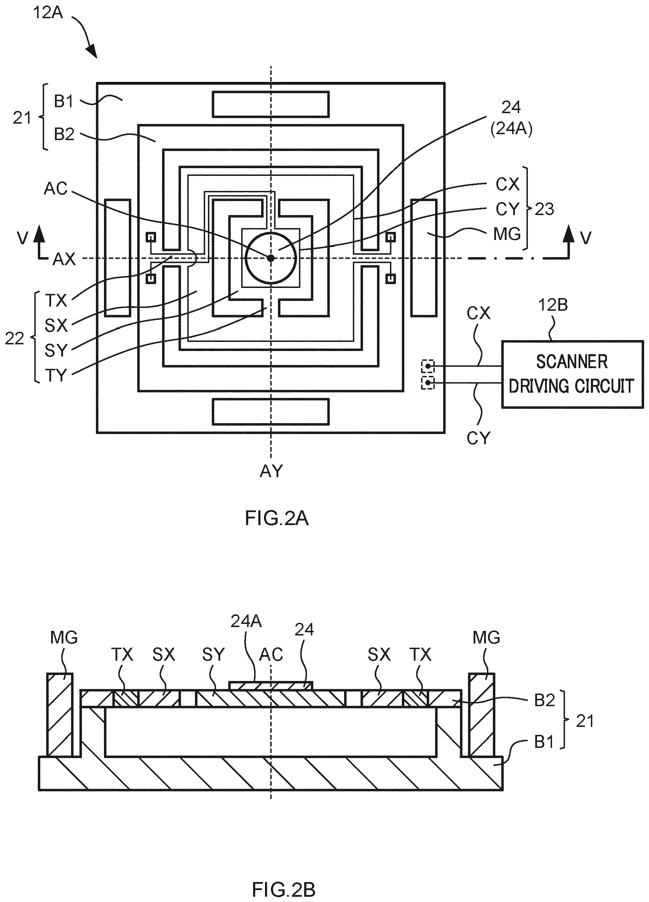

FIG. 2A is a schematic top view of the scanner 12A of the optical scanning unit 12. FIG. 2B is a cross-sectional view of the scanner 12A. FIG. 2B is the cross-sectional view taken along the line V-V of FIG. 2A. Using FIG. 2A and FIG. 2B, a configuration example of the scanner 12A will be described.

In the Embodiment, the scanner 12A includes a light reflecting film (mirror) 24 that has a light reflecting surface 24A reflecting the light (electromagnetic wave); the light reflecting film 24 is the MEMS (Micro Electro Mechanical Systems) mirror that swings two-dimensionally. In the Embodiment, the scanner 12A is configured to swing the light reflecting film 24 electromagnetically.

More specifically, the scanner 12A has a fixed portion (a base portion) 21, a movable portion (a swinging portion) 22, a driving force generating unit 23, and the light reflecting film 24. In the Embodiment, in the scanner 12A, the light reflecting film 24 is configured to swing around two swing axes (a first swing axis and a second swing axis) AX and AY, which are mutually orthogonal.

In the Embodiment, the fixed portion 21 includes a fixed substrate B1 and an annular fixed frame B2 formed on the fixed substrate B1. The movable portion 22 includes a pair of torsion bars (first torsion bars) TX one end of each of which is fixed inside the fixed frame B2. Each of the pair of the torsion bars TX is made from a bar-shaped elastic member having at least elasticity in a circumferential direction and is aligned along the swing axis AX. The movable portion 22 has an annular swing frame (a movable frame) SX an outer peripheral side surface of which is coupled to the other end of each of the pair of the torsion bars TX.

The movable portion 22 has a pair of torsion bars (second torsion bars) TY one end of each of which is coupled to an inner peripheral side surface of the movable frame SX and that is aligned in a direction orthogonal to the pair of torsion bars TX (a direction along the swing axis AY), and a swing plate (movable plate) SY an outer peripheral side surface of which is coupled to the other end of each of the pair of the torsion bars TY. Each of the pair of the torsion bars TY is made from the bar-shaped elastic member having at least elasticity in the circumferential direction.

In the Embodiment, the swing frame SX swings around the swing axis AX, and the swing plate SY swings around the swing axes AX and AY. The light reflecting film 24 is formed on the swing plate SY. Accordingly, the light reflecting surface 24A of the light reflecting film 24, together with the swing plate SY, swings around the swing axes AX and AY, which are mutually orthogonal.

The driving force generating unit 23 includes a permanent magnet MG arranged on the fixed substrate B1, a metal wiring (a first coil) CX routed along an outer periphery of the swing frame SX on the swing frame SX, and a metal wiring (a second coil) CY routed along an outer periphery of the swing plate SY on the swing plate SY.

In the Embodiment, the permanent magnet MG is constituted of a plurality of magnet pieces provided in an outer region of the fixed frame B2 on the fixed substrate B1. In the Embodiment, four magnet pieces are arranged at positions outside the pair of torsion bars TX and TY along each of the swing axes AX and AY, respectively.

The two magnet pieces opposing to each other in a direction along the swing axis AX are arranged such that portions having opposite polarities oppose to each other. Similarly, the two magnet pieces opposing to each other in a direction along the swing axis AY are arranged such that portions having opposite polarities oppose to each other.

In the Embodiment, an electric current flowing through the metal wiring CX causes the pair of the torsion bars TX to twist in the circumferential direction and causes the swing frame SX to swing around the swing axis AX, by an interaction with a magnetic field generated by the two magnetic pieces of the permanent magnet MG aligned in the direction along the swing axis AY. Similarly, by the electric current flowing through the metal wiring CY and the magnetic field generated by the two magnetic pieces of the permanent magnet MG aligned in the direction along the swing frame AX, the pair of the torsion bars TY twists and the swing plate SY swings around the swing axis AY.

The metal wirings CX and CY are coupled to the scanner driving circuit 12B. The scanner driving circuit 12B supplies the electric current (a driving signal) to the metal wirings CX and CY. The driving force generating unit 23 generates an electromagnetic force that swings the movable portion 22 and the light reflecting film 24, by an application of the driving signal.

In the Embodiment, the light reflecting film 24 has a circular-plate shape. A central axis AC of the light reflecting film 24 is located at a position orthogonal to the swing axes AX and AY. The light reflecting film 24, the swing frame SX, and the swing plate SY are configured and arranged so as to be coaxial. The movable portion 22 and the light reflecting film 24 are arranged in rotational symmetry with regard to the central axis AC of the light reflecting film 24.

As shown in FIG. 2B, in the Embodiment, the fixed substrate B1 of the fixed portion 21 has a concave portion. The fixed frame B2 is fixed to the fixed substrate B1 so as to suspend the movable portion 22 on the concave portion of the fixed substrate B1. The fixed fame B2 and the movable portion 22 (the swing frame SX, the swing plate SY, and the torsion bars TX and the TY) are portion of a semiconductor substrate formed by, for example, processing the semiconductor substrate.

The light reflecting film 24, together with the swing plate SY, is swingably suspended (supported) on the concave portion of the fixed substrate B1. The permanent magnet MG is formed outside the concave portion on the fixed substrate B1. In the Embodiment, twisting the torsion bars TX and TY causes both the ends of the movable portion 22, which sandwiches the torsion bars TX and TY, swing in the directions toward and away from the concave portion of the fixed substrate B1, inside the fixed frame B2. The light reflecting film 24 swings so as to incline with respect to the fixed frame B2, with one point on the central axis AC as the swing center.

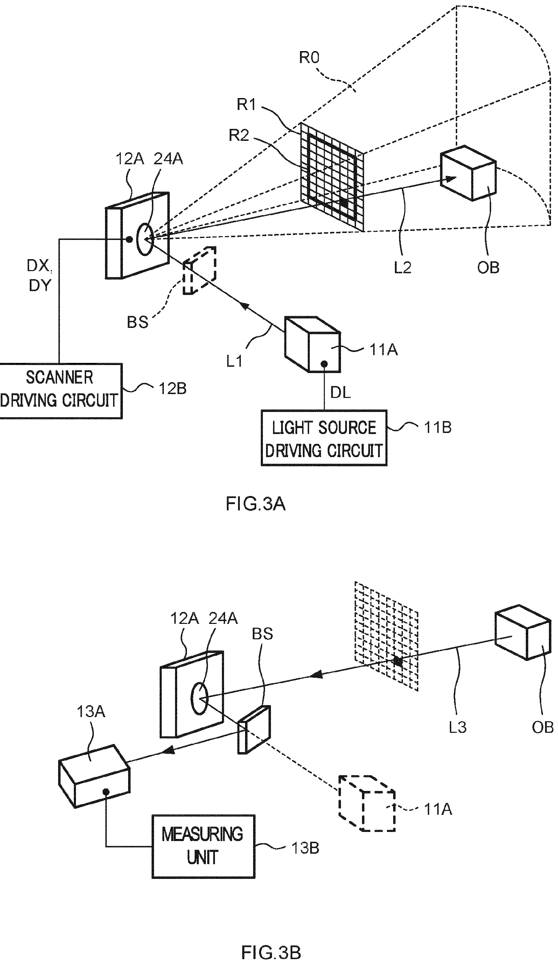

Next, using FIG. 3A and FIG. 3B, the operation of the ranging device 10 will be described. FIG. 3A and FIG. 3B are drawings indicating a schematically arranged example of the light source 11A and the scanner 12A. FIG. 3A is a drawing schematically indicating a path of a pulsed light L1 when the pulsed light L1 emitted from the light source 11A is irradiated on an object OB. FIG. 3B is a drawing schematically indicating a path of a reflected light L3 when the reflected light L3 reflected from the object OB is received by the light receiving unit 13A of the ranging unit 13.

First, as shown in FIG. 3A, the light source 11A generates the pulsed light L1 and emits toward the light reflecting film 24 (the light reflecting surface 24A) of the scanner 12A. In the Embodiment, a beam splitter BS is provided on an optical path of the pulsed light L1 between the light source 11A and the scanner 12A. At the time of emitting the pulsed light L1, the pulsed light L1 transmits the beam splitter BS to proceed toward the scanner 12A.

The light source 11A generates and emits the pulsed light L1 based on a driving signal (a light source driving signal) DL supplied from the light source driving circuit 11B. Specifically, the light source 11A emits a laser pulse as the pulsed light L1 at a timing based on the driving signal DL.

The light reflecting film 24 of the scanner 12A reflects the pulsed light L1 to generate a scanning light (a ranging light) L2 and emits the scanning light L2 toward a scanning target region R0, which is a region to be a scanning target. When the object OB (a body or a fluid having a property to reflect the pulsed light L1) exists on the optical path of the scanning light L2 in the scanning target region R0, the scanning light L2 is irradiated on the object OB.

The scanner 12A changes a reflection direction of the pulsed light L1 by the swing of the light reflecting film 24 (the light reflecting surface 24A). More specifically, the scanner driving circuit 12B generates driving signals (a first scanner driving signal and a second scanner driving signal) DX and DY for the light reflecting film 24 to swing around the respective swing axes AX and AY. In the Embodiment, the driving signals DX and DY are each supplied to the metal wirings CX and CY of the scanner 12A. This swings the light reflecting film 24 and changes the reflection direction of the pulsed light L1, that is, an emission direction of the scanning light L2.

The scanning target region R0 has a width and a height corresponding to a swingable range (a variable range of the direction of the scanning light L2) around the swing axes AX and AY of the light reflecting film 24 and is a virtual three-dimensional space having a depth corresponding to a reachable distance of the scanning light L2. In FIG. 3A, the scanning target region R0 is exemplary illustrated as a space enclosed by dashed lines.

Next, as shown in FIG. 3B, in the Embodiment, the reflected light L3 as the scanning light L2 reflected by the object OB returns to the light reflecting film 24 (the light reflecting surface 24A). Then, the reflected light L3 is reflected by the light reflecting surface 24A and received (detected) by the light receiving unit 13A of the ranging unit 13 after the reflected light L3 is separated by the beam splitter BS. For example, the light receiving unit 13A generates an electrical signal (a light receiving signal) based on an intensity of the reflected light L3.

The measuring unit 13B of the ranging unit 13 measures, for example, the distance between the light receiving unit 13A and the object OB based on the reflected light L3 received by the light receiving unit 13A. For example, the measuring unit 13B performs the ranging of the object OB using a time-of-flight method. Thus, the ranging device 10 performs the ranging operation to an object inside the predetermined region.

In the following, for the sake of description, a virtual surface away from the scanner 12A by a predetermined distance, inside the scanning target region R0, is sometimes referred to as a scanning target surface R1. In the Embodiment, the effective scanning region to be a ranging target in the ranging device 10 is a region (space) excluding an outer edge portion of the scanning target region R0 (scanning target surface R1), and, in FIG. 3A, is exemplary illustrated as an inside region (an effective scanning surface) R2 excluding the outer edge portion of the scanning target surface R1. The ranging operation of the ranging device 10 is performed using the scanning light L2 emitted toward the effective scanning surface R2. The scanning target surface R1 and the effective scanning surface R2 do not actually exist and are virtual irradiated surfaces of the scanning light L2 when it is assumed that the virtual irradiated surfaces exist on the emission direction of the scanning light L2.

The image generation unit 14A of the information processing unit 14 acquires the ranging data for each of the pulsed light L1 (the scanning light L2) emitted inside the effective scanning region (the effective scanning surface R2) and generates the image data with the ranging data as pixel data.

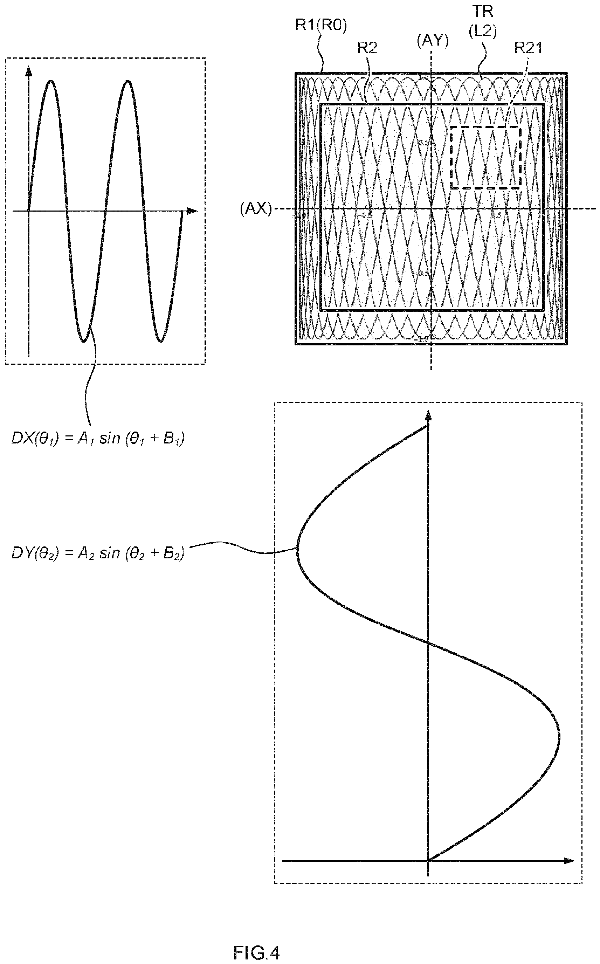

FIG. 4 is a diagram schematically illustrating a relationship between the driving signals DX and DY generated by the scanner driving circuit 12B, and a change of a swing state of the scanner 12A and the scanning trajectory of the scanning light L2 based on this. Using FIG. 4, an operation mode of the scanner 12A and a scanning mode of the scanning target region R0 by the scanning light L2 will be described.

First, the driving signal DX generated by the scanner driving circuit 12B is a sine wave signal represented by a formula DX (*θ*₁) = A₁sin (*θ*₁ + B₁), where A₁ and B₁ are constants and *θ*₁ is a variable. The driving signal DY is a sine wave signal represented by a formula DY (*θ*₂) = A₂sin (*θ*₂ + B₂), where A₂ and B₂ are constants and *θ*₂ is a variable.

The variable *θ*₁ is set such that the driving signal DX becomes a sine wave with a frequency corresponding to a resonant frequency of the torsion bars TX, the swing frame SX, the torsion bars TY, and the swing plate SY of the scanner 12A. The variable *θ*₂ is set such that the driving signal DY becomes a sine wave with a frequency corresponding to a resonant frequency of the torsion bars TY and the swing plate SY of the scanner 12A.

Accordingly, the light reflecting film 24 (the swing plate SY) resonates around the swing axis AX and resonates around the swing axis AY. Therefore, as shown in FIG. 4, when viewing the scanning target surface R1 of the scanning target region R0, the scanning light L2 as the pulsed light L1 reflected from the light reflecting film 24 of the scanner 12A indicates such a path TR (L2) as draws a Lissajous curve.

In other words, in the Embodiment, the scanner 12A (the optical scanning unit 12) has the light reflecting surface 24A that reflects the pulsed light L1 and swings around the first swing axis AX and the second swing axis AY, which are orthogonal to each other, and is configured to scan the scanning target region R0 along a scanning path according to the Lissajous curve.

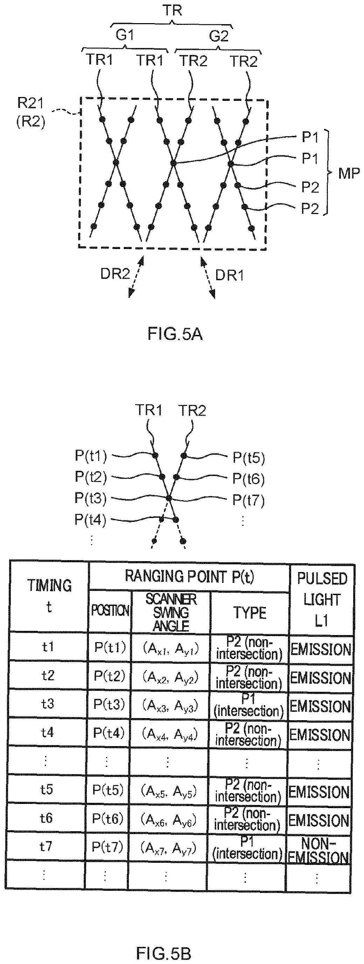

Next, using FIG. 5A and FIG. 5B, a description will be given of a relationship between a ranging point as the ranging point inside the effective scanning surface R2 that the ranging unit 13 ranges, that is, a swing position (a swing angle) of the light reflecting surface 24A in the scanner 12A and an emission timing of the pulsed light L1. FIG. 5A is a drawing illustrating an enlarged partial region R21 inside the effective scanning surface R2 enclosed by the dashed line in FIG. 4.

First, using FIG. 5A, the scanning trajectory of the scanner 12A inside the effective scanning surface R2, that is, the path TR of the scanning light L2 will be described. In the inside of the effective scanning surface R2, the path TR of the scanning light L2 is constituted of a first path line group G1 including a plurality of first path lines (line segments) TR1 along a first direction DR1 and a second path line group G2 including a plurality of second path lines (line segments) TR2 along a second direction DR2, which is different from the first direction DR1. Then, inside the effective scanning surface R2, there exists a point where the first path line TR1 and the second path line TR2 intersect (overlap).

Accordingly, for example, as shown in FIG. 5A, when a set of ranging points, which are the points where the ranging unit 13 performs ranging, is defined as a ranging point group MP, the ranging point group MP is categorized into a ranging point (hereinafter sometimes referred to as an intersection point or an intersection ranging point) PI where the first path line TR1 and the second path line TR2 on the effective scanning surface R2 intersect, and a ranging point (hereinafter sometimes referred to as a non-intersection ranging point) P2 where the first path line TR1 and the second path line TR2 do not intersect.

At a time of the emission of the scanning light L2 to the intersection ranging point PI when the scanning is performed along the first path line TR1 and at a time of the emission of the scanning light L2 to the intersection ranging point PI when the scanning is performed along the second path line TR2, the emission direction of the pulsed light L1 (namely, the scanning light L2) reflected by the light reflecting surface 24A is identical. That is, when the scanning is performed along the Lissajous curve, light emission in an identical direction is performed multiple times during one scanning cycle. The non-intersection ranging point P2 is the ranging point on the first path line TR1 or the ranging point on the second path line TR2.

Next, FIG. 5B is a drawing schematically describing the ranging operation along a time series of a ranging point P (t). FIG. 5B illustrates a ranging timing t, a position and a type of the ranging point P (t) corresponding to the timing t, and an example of switching the emission and a non-emission of the pulsed light L1 for each ranging point P (t) by the control unit 15.

First, in the Embodiment, the light source driving circuit 11B supplies the light source 11A with the driving signal DL such that the light source 11A emits the pulsed light L1 at predetermined time intervals. Accordingly, the light source 11A is configured to emit the pulsed light L1 repeatedly at the predetermined intervals on the first path line TR1 and the second path line TR2.

For example, as shown in FIG. 5B, the case when the timing t proceeds in an order of timing t1 to t4 and t5 to t7, and after the pulsed light L1 is sequentially emitted in the order of the ranging point P (t2), the ranging point P (t3) ... , from the ranging point P (t1) along the first path line TR1, the pulsed light L1 is sequentially emitted in this order of the ranging point P (t5), and the ranging point P (t6) along the second path line TR2 is considered.

In this case, the control unit 15 controls the light source unit 11 (the light source 11A and the light source driving circuit 11B) to halt the emission of the pulsed light L1 at the timing t7, which is late in the time series, to the ranging point PI where the first path line TR1 and the second path line TR2 intersect. That is, when the scanning light L2 is emitted in the identical direction within one scanning cycle, the pulsed light L1 is not emitted at the timing t7, which is late in the time series.

Specifically, first, the actual scanning trajectory estimation unit 15A of the control unit 15 acquires the information indicating the swing state of the scanner 12A from the optical scanning unit 12. With this information, the control unit 15 estimates the actual scanning trajectory (for example, parameters specifying the Lissajous curve) of the scanning light L2 on the effective scanning surface R2, from a change of the actual swing state of the scanner 12A. The ranging history acquisition unit 15B of the control unit 15 acquires, for example, the history of the ranging for each scanning light L2 traveling toward the ranging point P (t) within one scanning cycle, in the Embodiment, the history of a past irradiation result of the pulsed light L1 to the intersection point PI, from the ranging unit 13.

Then, for example, as shown in FIG. 5B, the control unit 15 determines (estimates) the swing angle of the light reflecting surface 24A for each timing t, and determines the emission direction of the scanning light L2 for each timing t, namely, whether the ranging point P (t) on the effective scanning surface R2 is the intersection ranging point PI or the non-intersection ranging point P2. The control unit 15 determines by the timing t6 that the ranging to the intersection ranging point PI has already been performed at the timing t3 and will be performed again repeatedly at the timing t7.

Then, the control unit 15 performs the operational control of the light source 11A so that the ranging unit 13 will not perform the ranging at the timing t7, namely, the light source 11A will not emit the pulsed light L1. In the Embodiment, the light source control unit 15C of the control unit 15 causes the light source driving circuit 11B to generate the light source driving signal DL to halt the emission of the pulsed light L1 at the timing t7.

Thus, in the Embodiment, the control unit 15 controls the emission of the pulsed light L1 (in the embodiment, halt the emission) at the timing t7 to the ranging point P (t7) where the scanning path TR overlaps, based on the actual scanning trajectory of the optical scanning unit 12 and the past ranging history at the ranging point P (t7) where the scanning path TR overlaps.

This suppresses the overlapped ranging operation by the scanning light L2 traveling toward the ranging points P (t3) and P (t7), which are the identical position on the effective scanning surface R2, namely, the unnecessary ranging operation. Therefore, the optical scanning type ranging device 10 performing the scanning on the trajectory according to the Lissajous curve optimizes the ranging operation at the ranging point PI, where the scanning path TR intersects.

The configuration of the ranging device 10 in the Embodiment is merely one example. For example, in the Embodiment, the description has been given of the case where the scanner 12A of the optical scanning unit 12 is the MEMS scanner that swings the light reflecting surface 24A electromagnetically and the scanning path TR has such the scanning mode as draws the Lissajous curve. However, the configuration of the optical scanning unit 12 is merely one example.

For example, the driving force of the scanner 12A is not limited to the electromagnetic force and may be an electrostatic force or a piezoelectric force. For example, when the electrostatic force swings the light reflecting surface 24A, it is only necessary that the driving force generating unit 23 is not the permanent magnet MG and the metal wirings CX and CY, but a pair of electrodes each arranged with a space apart from each other on the swing frame SX and the swing plate SY, on the fixed frame B2. It is only necessary that the scanner driving circuit 12B is configured to apply a voltage to the electrodes as the driving signals DX and DY.

The scanner 12A (optical scanning unit 12) is not limited to the case of scanning the scanning target region R0 on the trajectory according to the Lissajous curve. For example, the scanning trajectory may differ for each scanning cycle (for each frame of the image data). It is only necessary that the optical scanning unit 12 is configured to scan the scanning target region R0 (effective scanning surface R2) by the pulsed light L1 (scanning light L2) along the intersecting scanning path TR.

In the Embodiment, the description has been given of the case where the control unit 15 controls the light source unit 11 such that the control unit 15 halts the emission of the pulsed light L1 at the late timing t7, of the timing t3 and the timing t7 where the scanning path TR emits the pulsed light L1 to the ranging point PI. However, the control unit 15 may perform the control halting the emission of the pulsed light L1 at the early timing t3 of the timings t3 and t7.

In the Embodiment, the description has been given of the case where, when the light source control unit 15C of the control unit 15 controls the light source unit 11, the scanning state (that is, the actual scanning path TR or the emission direction of the scanning light L2 during the scanning) of the optical scanning unit 12 and the ranging history by the ranging unit 13 are considered. This enables accurately understanding the ranging point where the scanning path TR overlaps and the ranging timing, and accurately performing the emission control of the pulsed light L1 at the timing. However, the control condition of the light source unit 11 by the control unit 15 is not limited to this.

For example, when a usage environment (for example, temperature, humidity, and an operation time) is within an expected range, the scanning path TR of the scanning light L2 by the optical scanning unit 12 is assumed to trace the path similar to the design path. Accordingly, the scanning path TR and the ranging point P1 where the scanning path TR intersects are preliminarily identifiable. Therefore, the control unit 15 may be configured, for example, as an initial setting, to halt the emission of the pulsed light L1 to the ranging point P1 at the emission timing of the scanning light L2 where overlapping of the scanning path TR is known.

Thus, in the Embodiment, the ranging device 10 has the light source unit 11 that emits the pulsed light L1, the optical scanning unit 12 that scans the predetermined region (scanning target region R0) by the pulsed light L1 and has the intersection point P1 where the path TR of the pulsed light L1 intersects when the virtual surface (effective scanning surface R2) inside the predetermined region is viewed, and the control unit 15 that switches the emission and the non-emission of the pulsed light L1 to the intersection point P1. Therefore, it is possible to provide the ranging device 10 that ensures adjusting the conditions of the ranging operation at the intersection point PI where the scanning trajectory intersects.

### Embodiment 2

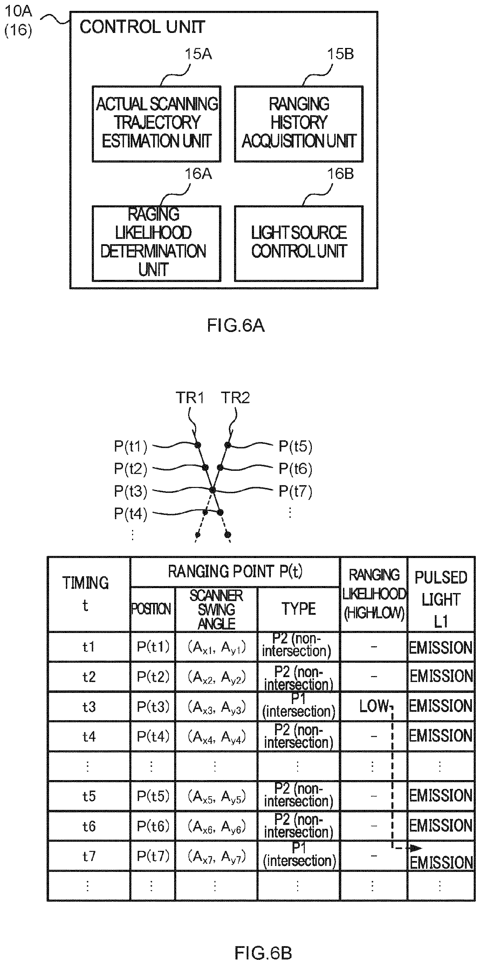

FIG. 6A is a block diagram of a control unit 16 of a ranging device 10A according to the Embodiment 2. The ranging device 10A has a configuration similar to the configuration of the ranging device 10 except for a configuration of the control unit 16. In the Embodiment, the control unit 16, similarly to the control unit 15, has the actual scanning trajectory estimation unit 15A and the ranging history acquisition unit 15B.

In the Embodiment, the control unit 16 has a ranging likelihood determination unit 16A determining a ranging likelihood at each ranging point P (t) based on the ranging history acquired from the ranging unit 13, and a light source control unit 16B controlling the emission of the pulsed light L1 to the ranging point PI where the scanning path TR overlaps within one scanning cycle based on the ranging likelihood.

The ranging likelihood determination unit 16A, for example, acquires the information on light reception results (light reception signals) of the reflected light L3 from the object OB, from the light receiving unit 13A of the ranging unit 13. Then, the ranging likelihood determination unit 16A determines the likelihood of the ranging results at each ranging point P (t), based on the light reception results of the reflected light L3. For example, the ranging likelihood determination unit 16A categorizes the ranging result at each ranging point P (t) into a predetermined likelihood level (for example, high likelihood or low likelihood).

The control unit 15 performs the emission control of the pulsed light L1 by the light source unit 11 to the ranging point P1 where the scanning path TR overlaps, based on the ranging likelihood for each ranging point P (t) determined by the ranging likelihood determination unit 16A.

FIG. 6B is a drawing indicating the ranging timing t, the position and type of the ranging point P (t) corresponding to the timing t, and an example of switching the emission and the non-emission of the pulsed light L1 for each ranging point P (t) by the control unit 16.

As shown in FIG. 6B, the ranging likelihood determination unit 16A of the control unit 16 determines the ranging likelihood of the ranging point P (t3), based on the ranging results to the ranging point P (t3) at the timing t3 where the first path line TR1 and the second path line TR2 intersect. Then, for example, when it is determined that the ranging likelihood to the ranging point P (t3) at the timing t3 is low, the light source control unit 16B controls the light source unit 11 to emit the pulsed light L1 so as to perform the ranging again at the timing t7, which is a timing to pass the ranging point P (t3) next. On the other hand, when the ranging likelihood to the ranging point P (t3) at the timing t3 is higher than a predetermined level, the light source control unit 16B controls the light source unit 11 not to emit the pulsed light L1 because it is unnecessary to perform the ranging again. This improves the accuracy of the acquired ranging data and ensures acquiring highly accurate ranging results.

Thus, the control unit 16 of the ranging device 10A determines whether to emit or not to emit the pulsed light L1 again at the next timing (timing t7) when the pulsed light L1 passes through the intersection ranging point PI, based on the ranging likelihood at the time of the past ranging at the intersection ranging point P1. That is, the ranging device 10A is configured to avoid the unnecessary ranging operation at the intersection ranging point PI and perform the ranging operation again (multiple times) for the ranging point P (t) where the likelihood of the ranging result is low. Therefore, it is possible to provide the ranging device 10A that reduces a process load at the time of the operation and ensures performing a highly accurate ranging operation.

In the Embodiment, the description has been given of the case where the control unit 16 has the ranging likelihood determination unit 16A and switches execution and non-execution of the next ranging operation (the emission of the pulsed light L1) at the intersection ranging point P1 based on the ranging likelihood at the intersection ranging point P1. However, the condition where the control unit 16 performs switching the emission of the pulsed light L1 at the intersection ranging point PI is not limited to the ranging likelihood at the time of the past ranging.

For example, the control unit 16 may perform the emission control of the pulsed light L1 by the light source unit 11 at the intersection ranging point PI, based on, for example, the ranging data and the ranging likelihood at the non-intersection ranging point P2 ranged at the timing before the timing of ranging the intersection ranging point P1.

For example, when the emission or the non-emission of the pulsed light L1 at the ranging point P (t7) as the intersection ranging point PI is determined, even when the ranging likelihood at the time of past (timing t3) ranging is low, it is sometimes unnecessary to perform the ranging again when the ranging likelihood at the ranging point P (t6) as the non-intersection ranging point P2 at the immediately preceding timing (timing t6) is high and ranging information at the intersection ranging point P (t7) is presumable. In this case, the control unit 16 may control the light source unit 11 not to emit the pulsed light L1 at the intersection ranging point PI even when the ranging likelihood at the time of the past ranging is low.

For example, the control unit 16 may control the emission of the pulsed light L1 to the intersection ranging point PI, based on a total light amount of the pulsed light L1 emitted within a predetermined time toward a partial region inside the scanning target region R0 including the intersection ranging point PI. For example, the control unit 16 may perform the emission control of the pulsed light L1 by the light source unit 11, based on a count of the pulsed light L1 emitted within the predetermined time toward the inside the partial region including the intersection ranging point P1. This is a condition considering that the pulsed light L1 adversely affects health of a living being such as a human body due to an intensive emission of the pulsed light L1 in an identical direction within the predetermined time, in addition to considering an avoidance of an unnecessary (excessive) count of ranging operations within the predetermined region.

Specifically, for example, it is assumed that continuous emission of the pulsed light L1 with an excessive intensity and count toward a predetermined region causes a case where an upper limit of a laser intensity of class 1 regulated in Japan Industrial Standard (JIS) becomes non-negligible. The control unit 16 may perform the emission control of the light source unit 11 by setting this safety limit.

In this case, it is only necessary, for example, that the control unit 16 acquires information on a count of emission and an emission intensity of the pulsed light L1 inside the scanning target region R0 or the partial region including the ranging point P (t7) inside the scanning target region R0, from the ranging history acquisition unit 15B, and, based on this, the light source control unit 16B switches the emission and the non-emission of the pulsed light L1 at the timing t7.

For example, when it is preferable to perform the ranging again at the timing t7 by, for example, the ranging likelihood, it is only necessary that the light source control unit 16B of the control unit 16 controls the light source unit 11 to lower the emission intensity of the pulsed light L1 at the timing t7. That is, the control unit 16 may not only switch the emission and the non-emission of the pulsed light L1 but also control the light source unit 11 to adjust the emission intensity of the pulsed light L1.

Thus, the control unit 16 of the ranging device 10A considers various conditions to perform switching of the emission and the non-emission of the pulsed light L1 to the ranging point PI, where the scanning path TR of the optical scanning unit 12 intersects, and the control of the emission intensity. Therefore, it is possible to provide the ranging device 10A that ensures adjusting the conditions of the ranging operation at the ranging point PI where the scanning trajectory intersects.

As described above, the ranging devices 10 and 10A have the light source unit 11 emitting the pulsed light L1, the optical scanning unit 12 scanning the predetermined region (scanning target region R0) along the intersecting scanning path TR, by the pulsed light L1, and the control unit 15 controlling the emission of the pulsed light L1 to the ranging point PI where the scanning path TR in the predetermined region overlaps, based on predetermined conditions on the reflected light L3. Therefore, it is possible to provide the ranging device that ensures adjusting the conditions of the ranging operation at the ranging point P1 where the scanning trajectory intersects.

### DESCRIPTION OF REFERENCE SIGNS

- 10, 10A: ranging device
- 11: light source unit
- 12: optical scanning unit
- 13: ranging unit
- 15, 16: control unit

## Claims

1. A ranging device comprising
a light source unit that emits a pulsed light;
an optical scanning unit that scans a predetermined region with the pulsed light and has an intersection point where a path of the pulsed light intersects when viewing a virtual surface inside the predetermined region;
a ranging unit that receives a reflected light from an object irradiated with the pulsed light to measure a distance to the object; and
a control unit that controls an emission of the pulsed light to the intersection point based on a predetermined condition on the reflected light.

2. The ranging device according to claim 1, wherein
the control unit controls the emission of the pulsed light to the intersection point based on a history of a past irradiation result of the pulsed light to the intersection point by the ranging unit.

3. The ranging device according to claim 2, wherein
the control unit controls the emission of the pulsed light to the intersection point based on a likelihood of the past ranging result by the pulsed light emitted to the intersection point by the ranging unit.

4. The ranging device according to any one of claims 1 to 3, wherein
the control unit controls the emission of the pulsed light to the intersection point based on a total light amount of the pulsed light emitted within a predetermined time to a region on the virtual surface.

5. The ranging device according to any one of claims 1 to 4, wherein
the control unit controls the light source unit to switch the emission and non-emission of the pulsed light to the intersection point.

6. The ranging device according to any one of claims 1 to 4, wherein
the control unit controls the light source unit to adjust an emission intensity of the pulsed light to the intersection point.

7. An optical scanning device comprising
a light source unit that emits a light;
an optical scanning unit that scans a predetermined region by the light while changing an irradiation direction of the light;
a light receiving unit that receives a reflected light from an object where the light is irradiated; and
a control unit that controls an emission of the light, wherein
the optical scanning unit is configured to emit the light multiple times in an identical direction during one scanning cycle, and
the control unit controls a count of irradiation of the light in the identical direction during the one scanning cycle based on a predetermined condition on the reflected light.
